# EUROPEAN PATENT SPECIFICATION

(11) **EP 0 435 465 B1**
(45) Date of publication and mention of the grant of the patent: **08.06.1994**
(21) Application number: 90312927.8
(22) Date of filing: 28.11.1990
(51) Int. Cl.: B60C 9/20

(54) **Radial ply tyre**
Radialer Luftreifen
Bande pneumatique radial

(30) Priority: 30.11.1989 JP 312454/89
(43) Date of publication of application: 03.07.1991
(73) Proprietor: SUMITOMO RUBBER INDUSTRIES LIMITED, Kobe-shi Hyogo-ken (JP)
(72) Inventor: Narahara, Yasuhiro, Higashinada-ku, Kobe-shi, Hyogo-ken (JP); Adachi, Yukishige, Akashi-shi, Hyogo-ken (JP)
(74) Representative: Stewart, Charles Geoffrey

(56) References cited:
- DE-A- 3 407 874
- FR-A- 2 246 404
- FR-A- 2 337 053
- FR-A- 2 398 623
- FR-A- 2 512 747

## Description

The present invention relates to a belted radial ply tyre which is improved in directional stability during straight running.

When a vehicle provided with radial ply tyres is running straight, a phenomenon called "handle pull" or "steering pull" can occur. In this phenomenon the actual running direction of the vehicle is biased toward one side, right or left, of the intended straight running direction.

The main cause of the phenomenon of "steering pull" is considered to be due to a high residual cornering force (CF) of the tyres. Residual cornering force is defined as the cornering force at a slip angle at which self aligning torque (SAT) becomes zero.

In radial ply tyres having a higher cornering power (CP), for example radial ply tyres provided with a steel cord belt reinforcement, the value of residual cornering force tends to become large.

In order to reduce the residual cornering force and, thereby, to prevent the "steering pull" phenomenon, decreasing the angle of the belt cords and decreasing rigidity of the tread pattern have been suggested. However, these methods reduce the dynamic performance of the tyre and vehicle.

It is therefore an object of the present invention to provide a radial ply tyre in which residual cornering force is reduced and thereby the "steering pull" phenomenon is prevented, without deterioration of other aspects of the tyre performance.

According to the present invention a radial ply tyre comprises a pair of bead cores disposed one in each bead portion of the tyre, a radial carcass ply extending between the bead portions and turned up around the bead cores from the axially inside to the outside thereof to be secured thereto, and a belt comprising two plies of parallel steel cords disposed radially outside the carcass ply in a tread portion of the tyre, wherein the amount of steel included in the radially innermost belt ply per axial unit width and circumferential unit length thereof is less than that in the radially outer belt ply disposed radially outside the innermost belt ply.

The above-mentioned amount of steel within the innermost belt ply is in the range of 50 to 98% of the amount of steel within the outer belt ply.

Further, in a section, including the tyre axis, of the outer belt ply the total of the sectional areas of the steel cords is in the range of 7 to 14 mm² per 50 mm width.

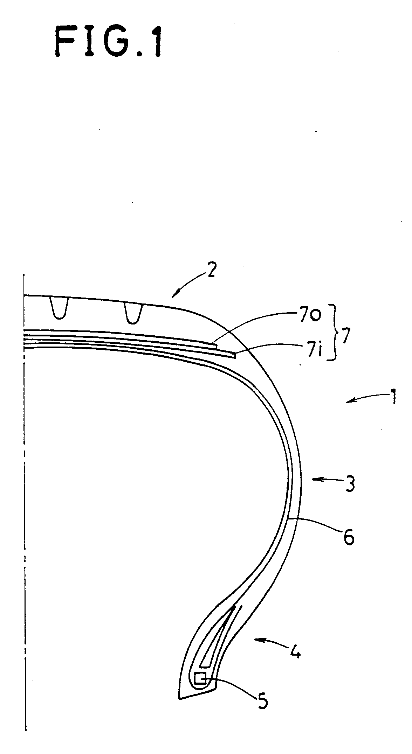

An embodiment of the present invention will now be described in detail in conjunction with the drawing shown in Figure 1, which is a sectional view showing a right half of a radial ply tyre.

The radial ply tyre 1 has a tread portion 2, a pair of bead portions 4, and a pair of sidewall portions 3 extending between the tread edges and the bead portions (4).

The tyre comprises a pair of bead cores 5 disposed one in each of the bead portions 4, a radial carcass 6 composed of at least one ply of radially arranged cords turned up around the bead cores from the axially inside to outside thereof, a rubber tread 2 disposed radially outside the carcass 6, and a belt 7 disposed radially outside the carcass 6 and inside the tread 7.

For the carcass 6, steel cords or organic fibre cord, e.g. polyester, nylon or aromatic polyamide are used.

The belt 7 is composed of two plies 7o and 7i of parallel steel cords coated with topping rubber. However, one or more additional plies can be included therein.

The belt plies 7o and 7i both extend continuously across the tread portion, and the radially innermost belt ply 7i is disposed on the crown of the carcass 6, and the radially outer belt ply 7o is disposed on the outside of the belt ply 7i.

The steel cords in each belt ply are laid parallel with each other at a small angle of 10 to 30 degrees with respect to the tyre circumferential direction but crosswise to the steel cords in the next ply.

The amount of steel included in the inner belt ply 7i is less than the amount of steel included in the outer belt ply 7o regardless of cord thickness, the cord structure, the cord count, the cord angle and the like. That is, in the axial section of the tyre the thickness and structure of the belt cords and the cord count for each belt ply are arranged to satisfy the following conditions: the total of the sectional areas of the steel cords included in the inner belt ply 7i per unit width is smaller than the total of the sectional areas of the steel cords included in the outer belt ply 7o per the same unit width; this total in the outer belt ply 7o is in the range of 7 to 14.0 mm² per unit width of 50 mm measured along the ply; and the total in the inner belt ply 7i is 50 to 98%, more preferably 50 to 95%, still more preferably 50 to 90% of the total in the outer belt ply 7o.

In this case, therefore, the amount of steel in the belt is reduced in comparison with the case that the same plies are used for inner and outer plies and the residual cornering force is decreased. As a result, the "steering pull" phenomenon is prevented. Furthermore at the same time the decrease in cornering power is controlled since it is the steel amount in the inner belt ply 7i, which has a lesser relationship with cornering power, that is decreased, whilst the steel amount in the outer belt ply 7o, which has a close relationship to cornering power, is maintained.

Furthermore, it has been found that it is effective in reducing residual cornering force to provide a difference in the steel amount between the plies 7o and 7i as well as to decrease the total of the steel amounts.

When the above-mentioned total sectional area of the outer belt ply cords is less than 7 mm², the belt does not have the necessary rigidity. On the other hand, when it is more than 14.0 mm², the stiffness of the belt is excessive and ride comfort is impaired.

When the above-mentioned percentage of steel in the inner belt 7i exceeds 98%, there is substantially no difference therebetween, and the above-mentioned objective can not be achieved. On the other hand, when it is less than 50%, the belt does not have the necessary circumferential rigidity because this rigidity is achieved by the cross cord arrangement of the belt plies.

Test tyres of size P155/80R13 were made according to specifications given in the following Table 1 and tested for cornering power CP and residual cornering force CF.

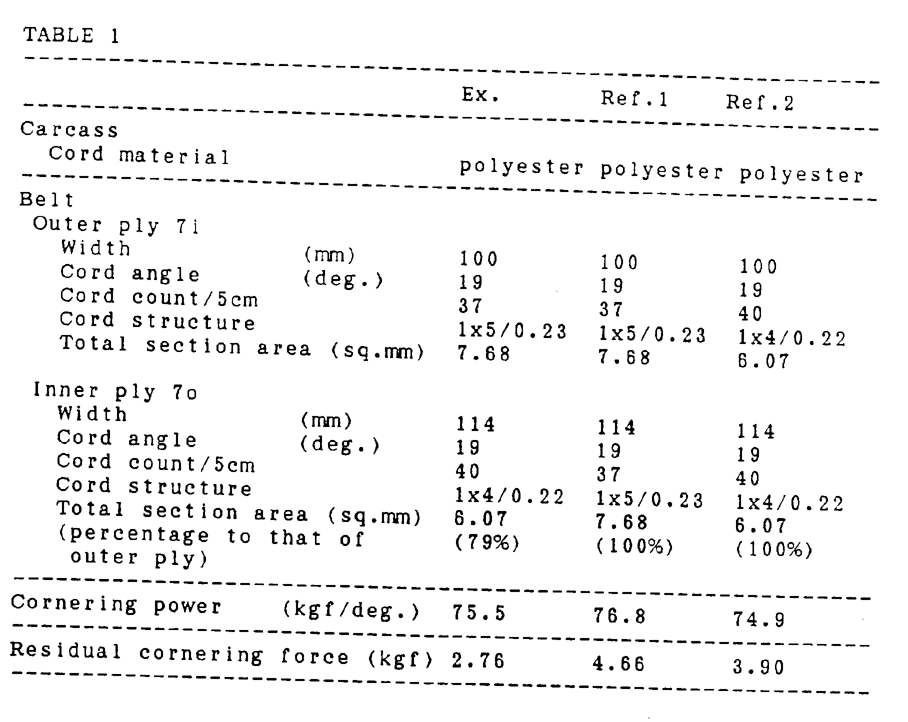

In the working example tyre, the percentage of the steel amount in the inner belt ply 7i was 79% of that of the outer belt ply 7o.

In each of the reference tyres 1 and 2, the outer and inner belt plies had the same steel amount, but belt plies with a higher steel amount were used in reference tyre 1 and in contrast belt plies with a lower steel amount were used in reference tyre 2.

In the tests, cornering power CP and residual cornering force CF were measured using an indoor drum test machine under the following test conditions: Inner air pressure of 2.0 kg/cm²; and Tyre load of 327kgf.

The working example tyre showed greatly reduced residual cornering force CF, but the reduction in the cornering power CP was less.

As described above, in the radial tyre according to the present invention, the amount of steel included in the inner belt ply is less than that in the outer belt ply. This results in residual cornering force being greatly reduced, and the "steering pull" phenomenon can be effectively prevented.

## Claims

1. A radial ply tyre (1) comprising a pair of bead cores (5) disposed one in each bead portion (4) of the tyre (1), a radial carcass ply (6) extending between the bead portions (4) and turned up around the bead cores (5) from the axially inside to the outside thereof to be secured thereto, and a belt (7) comprising two plies (7o, 7i) of parallel steel cords disposed radially outside the carcass ply in a tread portion of the tyre, characterised in that the amount of steel included in the radially innermost belt ply (7i) per axial unit width and circumferential unit length thereof is less than that in the radially outer belt ply (7o) disposed radially outside the innermost belt ply (7i).

2. A radial ply tyre according to claim 1 characterised in that the amount of steel within the innermost belt ply (7i) is in the range of 50 to 98% of the amount of steel within the outer belt ply (7o).

3. A radial ply tyre according to claim 1 or 2 characterised in that in a section, including the tyre axis, of the outer belt ply (7o), the total of the sectional areas of the steel cords is in the range of 7 to 14 mm² per 50 mm width.

## Revendications

1. Pneumatique (1) à carcasse radiale comprenant deux tringles (5) disposées chacune dans une partie de talon (4) du pneumatique (1), une nappe (6) de carcasse radiale étant disposée entre les parties (4) de talon et repliée autour des tringles (5) de l'intérieur vers l'extérieur en direction axiale afin qu'elle soit fixée aux tringles, et une ceinture (7) comprenant deux nappes (7o, 7i) de câblés parallèles d'acier disposées radialement à l'extérieur de la nappe de carcasse dans une partie de bande de roulement du pneumatique, caractérisé en ce que la quantité d'acier incorporée dans la nappe radialement la plus interne (7i) de la ceinture par unité de largeur axiale et par unité de longueur circonférentielle est inférieure à celle de la nappe radialement externe (7o) de ceinture disposée radialement à l'extérieur de la nappe la plus interne (7i) de ceinture.

2. Pneumatique à carcasse radiale selon la revendication 1, caractérisé en ce que la quantité d'acier transmise dans la nappe la plus interne (7i) de ceinture est comprise entre 50 et 98 % de la quantité d'acier contenue dans la nappe externe (7o) de ceinture.

3. Pneumatique à carcasse radiale selon la revendication 1 ou 2, caractérisé en ce que, en coupe par l'axe du pneumatique de la nappe externe (7o) de ceinture, la somme des sections des câblés d'acier est comprise entre 7 et 14 mm² pour une largeur de 50 mm.

## Patentansprüche

1. Ein Radiallagenreifen (1) mit einem Paar von Wulstkernen (5), das einer in jedem Wulstteil (4) des Reifens (1) angeordnet ist, einer radialen Karkassenlage (6), die sich zwischen den Wulstteilen (4) erstreckt und um die Wulstkerne (5) von der axialen Innenseite zur Außenseite davon umgeschlagen ist, um daran befestigt zu sein, und einem Gürtel (7), der zwei Lagen (7o, 7i) von parallelen Stahlkorden umfaßt, die radial außerhalb der Karkassenlage in einem Laufflächenteil des Reifens angeordnet sind, dadurch gekennzeichnet, daß die Menge von Stahl, die in der radial innersten Gürtellage (7i) pro axialer Einheitsbreite und Umfangseinheitslänge davon beinhaltet ist, weniger als jene in der radial äußeren Gürtellage (7o) ist, die radial außerhalb der innersten Gürtellage (7i) angeordnet ist.

2. Ein Radialreifen nach Anspruch 1, dadurch gekennzeichnet, daß die Menge von Stahl innerhalb der innersten Gürtellage (7i) in dem Bereich von 50 bis 98 % der Stahlmenge innerhalb der äußeren Gürtellage (7o) liegt.

3. Ein Radialreifen nach Anspruch 1 oder 2, dadurch gekennzeichnet, daß in einem Querschnitt, der die Reifenachse umfaßt, der äußeren Gürtellage (7o) die Gesamtheit der Querschnittsflächen der Stahlkorde in dem Bereich von 7 bis 14 mm² pro 50 mm Breite liegt.
